# EUROPEAN PATENT APPLICATION

(11) **EP 4 542 756 A1**
(43) Date of publication of application: **23.04.2025**
(21) Application number: 24184413.3
(22) Date of filing: 25.06.2024
(51) Int. Cl.: H01M 50/503, H01M 50/509

(54) **BUSBAR STRUCTURE, CCS ASSEMBLY, AND BATTERY MODULE**

(30) Priority: 20.10.2023 CN 202322830866 U
(71) Applicant: Eve Energy Co., Ltd., Huizhou, Guangdong 516006 (CN)
(72) Inventor: Chen, Jingcong, Huizhou, Guangdong, 516006 (CN)
(74) Representative: Petraz, Gilberto Luigi

(57) **Abstract**

Disclosed in the present disclosure is a busbar structure, including a plurality of conductive busbars arranged in a first direction, two adjacent conductive busbars being provided vertically flipped over, in which the conductive busbar includes a first conductive unit for being connected to positive electrodes of cells and a second conductive unit for being connected to negative electrodes of cells, the first conductive unit and the second conductive unit are arranged in a second direction, each conductive busbar is used to connect the cells, arranged in two adjacent zigzagged cell rows along the second direction, in series along the first direction in a zigzag pattern, respectively.

## Description

The present application claims priority of Chinese Patent Application No. 2023228308662 filed on October 20, 2023 before CNIPA. All the above are hereby incorporated by reference in their entirety.

### Field

The present disclosure relates to technical field of batteries and, particularly, to a busbar structure, a cells contact system (hereinafter referred as CCS) assembly, and a battery module.

### Background

As energy becomes increasingly scarce and technology continues to advance, electric vehicles have seen rapid development. One of the key technologies for the development of electric vehicles is the power battery, and the power batteries applied in electric vehicles are mainly in the form of battery modules. Battery module is assembled through the series and parallel connection combination of multiple single cells, equipped with the corresponding control and protection elements, so that it facilitates the mounting and maintenance, and meets the requirements for the use of battery packs.

The series and parallel connection combinations of multiple single cells are connected by means of a busbar structure. The busbar assembly and the large cylindrical power battery module in the related technology may, under the action of the busbar assembly, connect the cells in the length direction of the battery module in an in-line series connection, and connect the cells in the width direction of the battery module in a zigzagged parallel connection.

### Summary

Adopting the above series and parallel connection arrangement has high space requirements in the length direction of the battery pack, and the length space in the battery pack restricts the number of battery series, which leads to insufficient battery voltage, thereby failing to meet the system voltage performance requirements.

In the first aspect, provided in the present disclosure is a busbar structure, including a plurality of conductive busbars arranged in a first direction, two adjacent conductive busbars being provided vertically flipped over, in which

the conductive busbar includes a first conductive unit for being connected to positive electrodes of cells and a second conductive unit for being connected to negative electrodes of cells, the first conductive unit and the second conductive unit are arranged in a second direction, each conductive busbar is used to connect the cells, arranged in two adjacent zigzagged cell rows along the second direction, in series along the first direction in a zigzag pattern, respectively.

In the second aspect, provided in the present disclosure is a CCS assembly, including the aforementioned busbar structure.

In the third aspect, provided in the present disclosure is a battery module, including the aforementioned CCS assembly, and a cell set, in which the cell set includes a plurality of cell rows arranged in a zigzag pattern along the second direction, and the cell row includes a plurality of cells arranged in the first direction.

In the busbar structure of the present disclosure, a plurality of the conductive busbars may connect the cells, arranged in two adjacent zigzagged cell rows along the second direction, in series along the first direction in a zigzag pattern. Compared with the traditional in-line series connection, it is able to connect more cells in series within the same length space, so as to provide the highest voltage to meet the requirements of the system within a limited length space, which solves the problem of insufficient battery voltage due to the limitation of the number of cells in series in the length space of the battery pack, greatly improves the utilization rate of the space in the battery pack, and strengthens the voltage performance of the whole pack, which is able to satisfy the requirements of more high-voltage systems.

### Brief description of the drawings

Fig. 1 is a schematic structural diagram of the conductive busbar of the busbar structure in the present disclosure;
Fig. 2 is a side view of the conductive busbar of the busbar structure in the present disclosure;
Fig. 3 is a schematic structural diagram of the busbar structure in the present disclosure;
Fig. 4 is a schematic structural diagram of a part of the battery module in the present disclosure;
Fig. 5 is a circuit diagram of the series connection of the cells in the battery module of the present disclosure;
Fig. 6 is a circuit diagram of the parallel connection of the cells in the battery module of the present disclosure.

The meanings of the attached markings are as follows:
1 conductive busbar; 11 first conductive unit; 111 positioning hole; 12 second conductive unit; 121 avoidance groove; 13 current limiting hole; 2 first conductive member; 3 second conductive member; 4 cell set; 41 cell.
X first direction; Y second direction; Z third direction.

### Detailed description of the embodiments

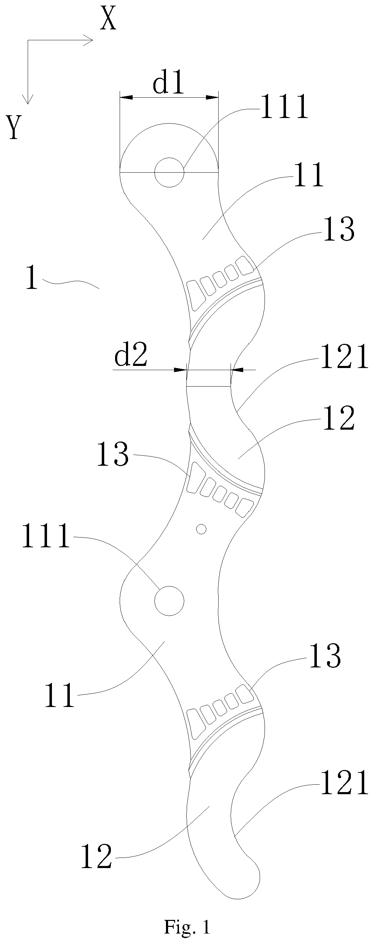

Referring to Figs. 1-6, disclosed in the present disclosure is a battery module, including a cell set 4 and a CCS assembly covering a top of the cell set 4, in which the CCS assembly includes a busbar structure, and the busbar structure is used to connect cells 41 within the cell set 4 in series and in parallel.

Specifically, the cell set 4 includes a plurality of cell rows arranged in a zigzag pattern along the second direction, and the cell row comprises a plurality of cells 41 arranged in the first direction, in which the first direction is the X-axis direction in the figure, i.e., the length direction of the cell set 4, and the second direction is the Y-axis direction in the figure, i.e., the width direction of the cell set 4.

In the present embodiment, the cell set 4 includes a first cell row, a second cell row, a third cell row, and a fourth cell row sequentially arranged in a zigzag pattern.

Referring to Figs. 1-3, the busbar structure includes a plurality of conductive busbars 1 arranged in a first direction X, and two adjacent conductive busbars 1 are provided vertically flipped over. Specifically, the conductive busbar 1 includes two first conductive units 11 for being connected to positive electrodes of cells 41 and two second conductive unit 12 for being connected to negative electrodes of cells 41, and two first conductive units 11 and two second conductive units 12 are sequentially arranged alternately in the second direction Y.

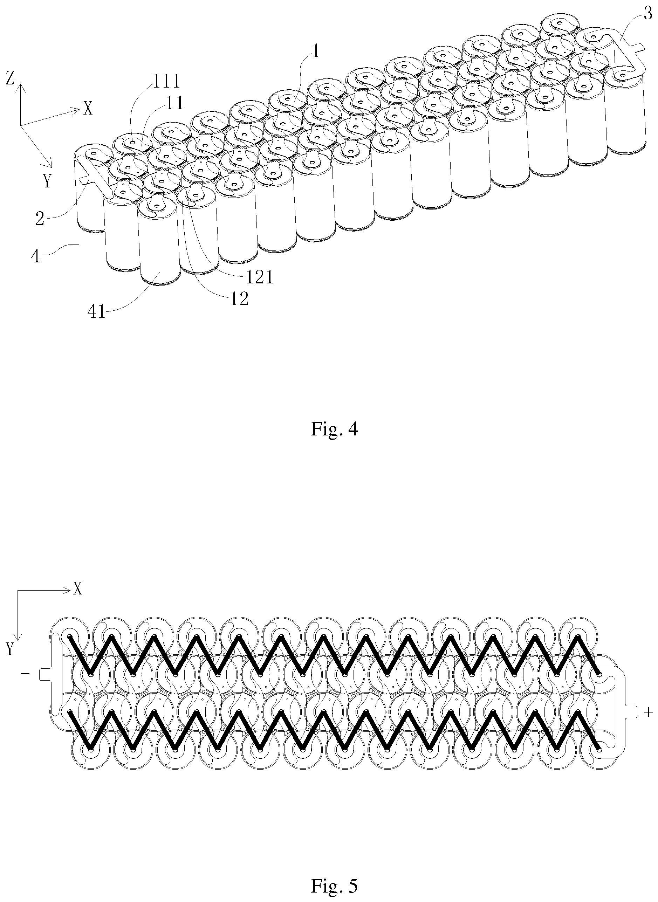

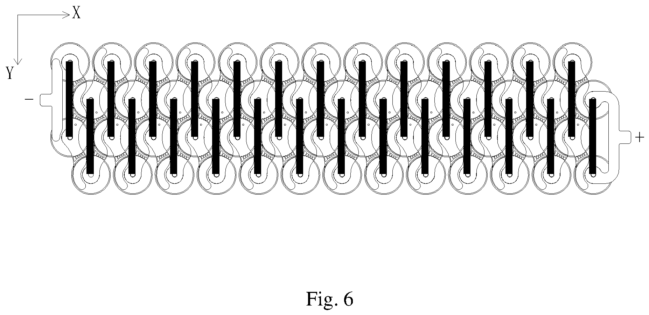

In such an arrangement, a plurality of conductive busbars 1 are arranged in the first direction X, connecting the cells 41 in the first cell row and the second cell row in series along the first direction in a zigzag pattern, connecting the cells 41 in the third cell row and the fourth cell row in series along the first direction in a zigzag pattern, as shown in Fig. 5. Also, a plurality of conductive busbars 1 connect the cells 41 in the first cell row and the third cell row in parallel and connect the cells 41 in the second cell row and the fourth cell row in parallel, as shown in Fig. 6.

It is evident from the above that, under the connection of a plurality of conductive busbars 1, it may connect the cells 41 in series in the length direction of the cell set in a zigzag pattern. Compared with the traditional in-line series connection, a connection in the zigzag pattern is able to connect more cells 41 in series within the same length space, so as to provide the highest voltage to meet the requirements of the system within a limited length space, which solves the problem of insufficient battery voltage due to the limitation of the number of cells in series in the length space of the battery pack, greatly improves the utilization rate of the space in the battery pack, and strengthens the voltage performance of the whole pack, which is able to satisfy the requirements of more high-voltage systems.

In the present embodiment, the conductive busbar 1 is made of 1060-O aluminum, in which 1060 indicates a model of an aluminum alloy, which is formed by adding a small amount of copper to pure aluminum, and the O refers to the annealed state, which means that the product has been completely annealed during the production process. This material offers good electrical and thermal conductivity as well as corrosion resistance, and has good deformability, which allows it to be easily processed into a variety of shapes and sizes of aluminum products, and is easy to be welded.

It should be noted that, in other implementations, the conductive busbar 1 may be provided with only single first conductive unit 11 and single second conductive unit 12, so as to match a cell set with two cell rows. Alternatively, the conductive busbar 1 may be provided with three or more first conductive units 11 and three or more second conductive units 12, so as to match a cell set with six or more cell rows, which is not limited herein.

In some implementations, the conductive busbar 1 is arranged in serpentine in the second direction Y, and the width of the conductive busbar 1 in the first direction X is uniformly distributed along the second direction Y. Therefore, when cutting a plurality of conductive busbars 1, the problem of low utilization of aluminum plates due to a large hollow cutting area of the aluminum plate may be effectively avoided, which achieves the stamping and cutting of the raw material of the aluminum plate in a collocation, improves the utilization rate of the raw material of the aluminum plate, and reduces the production cost.

Specifically, a width of the conductive busbar 1 in the first direction is d. In the present embodiment, the width d includes a maximum width d1 and a minimum width d2, in which the maximum width d1 is 20mm and the minimum width d2 is 9mm. The first conductive unit 11 has a maximum width d1 and the second conductive unit has a minimum width d2.

In such an arrangement, the conductive busbar 1 has a certain width in the first direction X, so as to avoid the occurrence of breakage due to the presence of narrow edges when the conductive busbar 1 is molded by integrally stamping, thereby enhancing the production yield of the conductive busbar 1, also facilitating the manufacture and assembly of the tooling fixtures in the production line, and saving the production cost.

Referring to Fig. 4, the cell 41 includes a positive electrode and a negative electrode, the negative electrode is provided on an end surface of the cell 41, a center position of the end surface is provided with a cylindrical protrusion, and the cylindrical protrusion is a part of the positive electrode of the cell 41. Since a height of the positive electrode of the cell 41 is higher than that of the negative electrode of the cell 41, a setting height of the first conductive unit 11 of the conductive busbar 1 differs in the third direction from that of the second conductive unit 12 of the conductive busbar 1. Specifically, a height of the first conductive unit 11 in a third direction is h1, a height of the second conductive unit 12 in the third direction is h2, and h1>h2. In some implementations, a height difference between h1 and h2 is 1.5mm.

The third direction is the Z-axis direction in the figure, i.e., the height direction of the cell set 4.

In such an arrangement, the first conductive unit 11 and the second conductive unit 12 are provided at different heights in the third direction Z to adapt to the height difference between the positive electrode and the negative electrode of the cell 41, which may avoid shaking of the battery module during use, thereby preventing the conductive busbars 1 from being subjected to tension or pressure for a long period of time and appearing as wrinkles or even generating breakage, so as to improve the reliability of the connection between the cells 41.

In some implementations, the first conductive unit 11 is provided with positioning holes 111 for connecting positive electrodes (i.e., the cylindrical protrusion) of cells 41. In some implementations, the positioning hole 111 is a circular through-hole, and the second conductive unit 12 is provided with avoidance grooves 121 for avoiding being in contact with positive electrodes of cells 41. In some implementations, the avoidance groove 121 is arc-shaped gaps matched the positive electrodes of cells 41. In such an arrangement, the positioning holes 111 are provided so as to facilitate the connection of the first conductive unit 11 to the positive electrodes of the cells 41, thereby improving the assembly efficiency. The avoidance groove 121 is provided so as to increase the connection area between the second conductive unit 12 and the negative electrodes of the cells 41 (the end surfaces of the cells 41), which consequently improves the reliability of the connection between the second conductive unit 12 and the negative electrodes of the cells 41. Therefore, it is not likely to lead to a false connection, and the avoidance groove 121 may also serve as a restricting function, preventing the conductive busbar 1 from falling off and shifting.

Referring to Fig. 1, a fuse structure is provided between the first conductive unit 11 and the second conductive unit 12 of the conductive busbar 1. In some implementations, the fuse structure is a current limiting hole 13 provided on the conductive busbar 1 and positioned at a connection between the first conductive unit 11 and the second conductive unit 12, in which the current limiting hole 13 may be provided with one or more according to actual needs. The setting of the current limiting hole 13 allows a reduction in the cross-sectional area of the connection between the first conductive unit 11 and the second conductive unit 12, thereby disconnecting the first conductive unit 11 and the second conductive unit 12 when the circuit is overloaded, so as to play a protective role in the circuit, and improve the safety performance of the battery.

Admittedly, in other implementations, the fuse structure may also be a metal with low melting point coated on the conductive busbar 1 and positioned at the connection between the first conductive unit 11 and the second conductive unit 12, such as tin. When the circuit suffers extreme conditions such as a short circuit, the current in the circuit increases rapidly, the increase in current leads to an increase in the circuit temperature, the temperature rises to the point causing the melting of low-melting-point metals, and the low-melting-point metal melting allows the conductive busbar 1 to become brittle and easy to break, so that the first conductive unit 11 and the second conductive unit 12 are quickly disconnected, so as to serve as a protector of the circuit, and to improve the safety performance of the battery.

In such an arrangement, when the circuit suffers extreme conditions such as a short circuit to render the circuit temperature too high, the fuse structure fuses by generating heat on itself, thereby rapidly disconnecting the circuit connection between the cells 41 arranged adjacent to each other along the second direction Y, thereby serving to protect the cells 41, which may then serve to protect the circuit, and improve the safety performance of the battery.

Furthermore, since the conductive busbar 1 has a certain width in the first direction X, it prevents the occurrence of breakage when a fuse structure (current limiting hole 13) is stamped on the conductive busbar 1, and saves manufacturing costs by eliminating the setting of a stamping tool that matches the narrow edge. Additionally, it prevents the situation where the fuse structure on the narrow side fuses first and the fuse structures on the other widths disconnect later, thereby achieving the protection of the circuit and ensuring the safety performance of the battery.

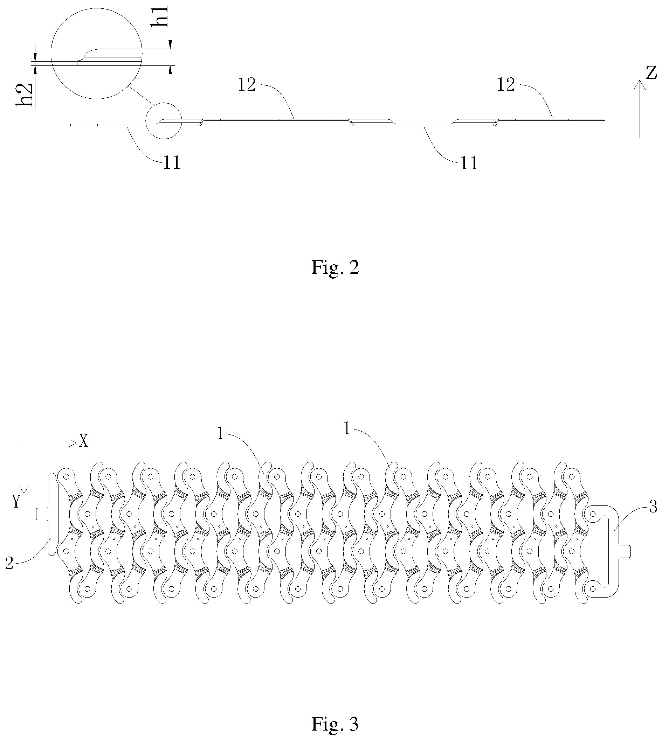

Referring to Figs. 3-6, the busbar structure also includes a first conductive member 1 and a second conductive member 2 respectively provided on both ends of the plurality of conductive busbars 1, the first conductive member 1 is used to connect two negative electrodes of cells 41 positioned at an input end, and the second conductive member 2 is used to connect two positive electrodes of cells 41 positioned at an output end. In some implementations, both the first conductive member 2 and the second conductive member 3 are conductive aluminum busbar.

In summary, the busbar structure, the CCS assembly, and the battery module provided by the present disclosure provide beneficial effects as follows.
(1) In the busbar structure of the present disclosure, a plurality of the conductive busbars 1 may connect the cells 41, arranged in the length direction of the cell set, in series in a zigzag pattern. Compared with the traditional in-line series connection, it is able to connect more cells 41 in series within the same length space, so as to provide the highest voltage to meet the requirements of the system within a limited length space, which solves the problem of insufficient battery voltage due to the limitation of the number of cells in series in the length space of the battery pack, greatly improves the utilization rate of the space in the battery pack, and strengthens the voltage performance of the whole pack, which is able to satisfy the requirements of more high-voltage systems.
(2) In the busbar structure of the present disclosure, the conductive busbar 1 is arranged in serpentine in the second direction, so that the problem of low utilization of aluminum plates due to a large hollow cutting area of the aluminum plate may be avoided, which achieve the stamping and cutting of the raw material of the aluminum plate in a collocation, improves the utilization rate of the raw material of the aluminum plate, and reduces the production cost.
(3) In the busbar structure of the present disclosure, the conductive busbar 1 has a certain width in the first direction X, so as to avoid the occurrence of breakage due to the presence of narrow edges when integrally stamping, thereby enhancing the production yield of the conductive busbar 1, also facilitating the manufacture and assembly of the tooling fixtures in the production line, and saving the production cost.
(3) In the busbar structure of the present disclosure, the first conductive unit 11 and the second conductive unit 12 in the conductive busbar 1 are provided at different heights in the third direction Z to adapt to the height difference between the positive electrode and the negative electrode of the cell 41, which may avoid shaking of the battery module during use, thereby preventing the conductive busbars 1 from being subjected to tension or pressure for a long period of time and appearing as wrinkles or even generating breakage, so as to improve the reliability of the connection between the cells 41.
(5) In the busbar structure of the present disclosure, the first conductive unit 11 of the conductive busbar 1 is provided with positioning holes 111 so as to facilitate the connection of the first conductive unit 11 to the positive electrodes of the cells 41, thereby improving the assembly efficiency. The second conductive unit 12 of the conductive busbar 1 is provided with avoidance groove 121 so as to increase the connection area between the second conductive unit 12 and the negative electrodes of the cells 41, which consequently improves the reliability of the connection between the second conductive unit 12 and the negative electrodes of the cells 41. Therefore, it is not likely to lead to a false connection, and the avoidance groove 121 may also serve as a restricting function, preventing the conductive busbar 1 from falling off and shifting.
(6) In the busbar structure of the present disclosure, the conductive busbar 1 is made of 1060-O aluminum. This material offers good electrical and thermal conductivity as well as corrosion resistance, and has good deformability, which allows it to be easily processed into a variety of shapes and sizes of aluminum products, and is easy to be welded.
(7) In the busbar structure of the present disclosure, one or more current limiting holes 13 are provided at the connection between the first conductive unit 11 and the second conductive unit 12 to allow a reduction in a cross-sectional area of the connection between the first conductive unit 11 and the second conductive unit 12, thereby disconnecting the first conductive unit 11 and the second conductive unit 12 when the circuit is overloaded, so as to play a protective role in the circuit, and improve the safety performance of the battery.
(8) In the busbar structure of the present disclosure, by coating the metal with low melting point at the connection between the first conductive unit 11 and the second conductive unit 12, when the circuit suffers extreme conditions such as a short circuit, the current in the circuit increases rapidly, the increase in current leads to an increase in the circuit temperature, the temperature rises to the point causing the melting of low-melting-point metals, and the low-melting-point metal melting allows the conductive busbar 1 to become brittle and easy to break, so that the first conductive unit 11 and the second conductive unit 12 are quickly disconnected, and to improve the safety performance of the battery.
(9) In the busbar structure of the present disclosure, the conductive busbar 1 has a certain width in the first direction, which prevents the occurrence of breakage when a fuse structure (current limiting hole 13) is stamped on the conductive busbar 1, and saves manufacturing costs by eliminating the setting of a stamping tool that matches the narrow edge. Additionally, it prevents the situation where the fuse structure on the narrow side fuses first and the fuse structures on the other widths disconnect later, thereby ensuring the safety performance of the battery.

## Claims

1. A busbar structure, comprising a plurality of conductive busbars (1) arranged in a first direction, two adjacent conductive busbars (1) being provided vertically flipped over, wherein:
the conductive busbar (1) comprises a first conductive unit (11) for being connected to positive electrodes of cells (41) and a second conductive unit (12) for being connected to negative electrodes of cells (12), the first conductive unit (11) and the second conductive unit (12) are arranged in a second direction, each conductive busbar (1) is used to connect the cells (41), arranged in two adjacent zigzagged cell rows along the second direction, in series along the first direction in a zigzag pattern, respectively.

2. The busbar structure according to claim 1, wherein the conductive busbar (1) comprises a plurality of the first conductive units (11) and a plurality of the second conductive units (12), a quantity of the second conductive unit (12) corresponds to that of the first conductive unit (11), the first conductive unit (11) and the second conductive unit (12) are sequentially arranged alternately in the second direction.

3. The busbar structure according to claim 1 or 2, wherein the conductive busbar (1) is arranged in serpentine in the second direction.

4. The busbar structure according to claim 1 or 2, wherein a width of the conductive busbar (1) in the first direction is d, and 9mm≤d≤20mm.

5. The busbar structure according to claim 1 or 2, wherein a height of the first conductive unit (11) of the conductive busbar (1) in a third direction is h1, a height of the second conductive unit (12) in the third direction is h2, and h1>h2.

6. The busbar structure according to claim 1 or 2, wherein the first conductive unit (11) is provided with positioning holes (111) for being connected to positive electrodes of cells (41), and the second conductive unit (12) is provided with avoidance grooves (121) for avoiding being in contact with positive electrodes of cells (41).

7. The busbar structure according to claim 1 or 2, wherein a fuse structure is provided between the first conductive unit (11) and the second conductive unit (12) of the conductive busbar (1).

8. The busbar structure according to claim 7, wherein a connecting segment between the first conductive unit (11) and the second conductive unit (12) is provided with at least one current limiting hole (13), and the connecting segment is formed as the fuse structure.

9. The busbar structure according to claim 7, wherein a connecting segment between the first conductive unit (11) and the second conductive unit (12) is coated with a metal with low melting point, and the connecting segment is formed as the fuse structure.

10. The busbar structure according to claim 1 or 2, wherein the conductive busbar (1) is made of 1060-O aluminum.

11. The busbar structure according to claim 1 or 2, further comprising a first conductive member (2) and a second conductive member (3) respectively provided on both ends of the plurality of conductive busbars (1), the first conductive member (2) is used to connect negative electrodes of cells (41) positioned at an input end, and the second conductive member (3) is used to connect positive electrodes of cells (41) positioned at an output end.

12. A CCS assembly, comprising the busbar structure as claimed in any one of claims 1-11.

13. A battery module, comprising the CCS assembly as claimed in claim 12, and a cell set (4), wherein the cell set (4) comprises a plurality of cell rows arranged in a zigzag pattern along the second direction, and the cell row comprises a plurality of cells (41) arranged in the first direction.
